# EUROPEAN PATENT SPECIFICATION

(11) **EP 4 516 504 B1**
(45) Date of publication and mention of the grant of the patent: **01.10.2025**
(21) Application number: 23382881.3
(22) Date of filing: 29.08.2023
(51) Int. Cl.: B32B 37/00, B32B 37/12, B41M 3/12, B42D 25/00, B44C 1/17

(54) **METHOD FOR MANUFACTURING A CARD-LIKE DATA CARRIER**
VERFAHREN ZUR HERSTELLUNG EINES KARTENFÖRMIGEN DATENTRÄGERS
PROCÉDÉ DE FABRICATION D'UN SUPPORT DE DONNÉES EN FORME DE CARTE

(43) Date of publication of application: 05.03.2025
(73) Proprietor: Giesecke+Devrient ePayments GmbH, 81677 München (DE)
(72) Inventor: Flores, Joan Sushil, 81677 München (DE); Avellaneda, Miguel, 81677 München (DE); Nuñez, Juan, 81677 München (DE)
(74) Representative: LKGLOBAL Lorenz & Kopf Patentanwalt Attorney at Law PartG mbB

(56) References cited:
- WO-A1-2019/224159
- DE-A1- 102012 223 700
- US-A1- 2018 215 190

## Description

### Technical Field

The disclosure generally relates to the manufacturing of cards with metallic effect. In particular, the invention relates to a method for manufacturing a card-like data carrier and a use of such a method for manufacturing a chip-card, a payment card, a smart card or an identification card.

### Technical Background

Data carrier cards are used in various different applications. For example, bank cards like credit cards are used as payment cards which allow a user of the bank card to pay for purchased goods or services. Such data carrier cards are often manufactured in a standardized format and usually include different layers of plastic materials which are bonded to each other to provide a stack of layers. For example, the layers may be manufactured from polyvinylchloride (PVC), polyethylene terephthalate (PET), etc. Some data carrier cards also comprise a metallic material layer in order to provide a metallic effect to the card. However, the manufacturing of cards having such a metallic material layer often is inefficient due to the large amount of waste metallic material. In particular, during the manufacturing process of data carrier cards with metallic material layers, the metallic material is often combined with and thus mixed with plastic material. In most cases, some excess material will remain after the production process.

However, due to the production process, the excess material includes a combination or mix of the metallic material and the plastic material which makes it difficult or impossible to separate the excess metallic material from the excess plastic material.

WO 2019/224159 A1 describes a method for producing a laminated body and a laminating inlay and a laminated body, a laminating inlay and a security document, in particular in the form of a bank card, identity card or credit card, having such a laminated body. The method comprises: providing a first laminating film, in particular of polycarbonate, providing at least one transfer film, which each have a carrier film and a decorative layer detachable from the carrier film, printing the first laminating film and/or the decorative layer with a radiation-curable adhesive, applying the transfer film to the laminating film in such a way that the radiation-curable adhesive layer is arranged between the decorative layer and the first laminating film, at least partly curing the radiation-curable adhesive layer, pulling the at least one transfer film off the first laminating film, wherein the decorative layer is detached from the transfer film in one or more first sub regions as it is pulled off and remains on the first laminating film, and laminating a plurality of successive films comprising the first laminating film having the one or more first sub regions having the decorative layer and at least one second laminating film to form the laminated body.

DE 10 2012 223700 A1 describes a method for producing a security feature for a valuable and/or security product, comprising the following method steps: providing a substrate having surfaces, providing at least one application element having a front side and a back side, producing a layer of an adhesion promoter on one of the surfaces of the substrate and/or on the back side of the at least one application element, applying the respective application element with its back side to the surface of the substrate provided with the respective layer of the adhesion promoter, permanently connecting the respective application element to the surface of the substrate exclusively in at least one adhesion region delimited by at least one free region and mechanically removing parts of the respective application element located in the at least one free region and not permanently connected to the surface of the substrate from the surface of the substrate, while parts of the application element located in the at least one adhesion region remain permanently connected to the surface of the substrate.

US 2018/215190 A1 describes a method for producing a multilayer film, with the steps: providing a base body with a carrier ply and a transfer ply, which comprises at least one layer; applying an in particular UV-curable adhesive to at least one partial area of the transfer ply of the base body; applying a stamping foil which comprises a carrier ply and a transfer ply, with the result that the transfer ply of the stamping foil comes into contact with the transfer ply of the base body coated with adhesive; curing the adhesive by UV irradiation; removing the carrier ply of the stamping foil.

### Summary

It may be seen as an object of the invention to facilitate the recycling of excess material from a card manufacturing process.

A method according to the features of the independent claim is provided. Further embodiments are evident from the dependent claims and from the following description.

According to an aspect, a method for manufacturing a card-like data carrier is provided. In a step of the method, a core layer having a first surface and a second surface opposite to the first surface is provided. In a further step, an adhesive is applied onto a portion of the first surface of the core layer. In a further step, an intermediate layer comprising a metallic material is provided, wherein the intermediate layer comprises a carrier layer having a surface on which the metallic material of the intermediate layer is present. In a further step, the intermediate layer is pressed against the first surface of the core layer, thereby bonding a first part of the intermediate layer via the adhesive to the portion of the first surface of the core layer. In a further step, a second part of the intermediate layer is moved away from the first surface of the core layer, while the first part of the intermediate layer remains adhered to the portion of the first surface of the core layer such that the portion of the first surface of the core layer is covered by the first part of the intermediate layer. A further step comprises reusing the second part of the intermediate layer after moving the second part of the intermediate layer away from the first surface of the core layer, wherein the reusing includes a pre-treatment of the removed second part of the intermediate layer in which the metallic material of the intermediate layer is separated from the carrier layer. Said method steps may be performed in the indicated order.

The inventive method provides a manufacturing technique for card-like data carriers with metallic effect, in which excess material, in particular metallic material left-over from the manufacturing process, can be provided in such a way that it can be reused, e.g., recycled. This may be achieved by moving the potential excess material of the intermediate layer, i.e., the second part of the intermediate layer, away from the first surface of the core layer after the first part of the intermediate layer has been applied to the surface of the core layer. In particular, the intermediate layer allows the application of the metallic material to the core layer without using PET-based metallized foils and without using metallic inks.

After manufacturing of the card-like data carrier, the removed second part of the intermediate layer may appear in a form or composition that can be directly reused or that can be easily separated from other material residuals. The inventive method thus facilitates the recycling of left-over materials from a card production process.

The card-like data carrier that can be manufactured using the inventive method may comprise an ID-1 format, however, may also comprise other formats as well. The card-like data carrier can be chip-card, a payment card, a smart card or an identification card. In particular, the card-like data carrier can be a debit card or credit card.

The card-like data carrier may comprise a chip element on an outer surface of the final card-like data carrier which is configured for a contact-communication, e.g., data transfer, with an external device, for example a card reading device. The card-like data carrier may comprise an antenna element which is configured for contactless communication with an external device, for example a card reading device. The antenna element may be integrated or embedded within the core layer.

The core layer may be made of a plastic material and may constitute a structural base layer of the card-like data carrier to which other layers are applied, e.g., bonded. In particular, further layers of material may be bonded to the first surface of the core layer and also to the opposite second surface of the core layer. The result may be a stack of several material layers which together form the final card-like data carrier.

The method comprises to apply the adhesive to the mentioned portion of the first surface of the core layer, which may include the provision of the adhesive only to one or more smaller parts of the first surface, but not to the entire first surface. However, if it is required by the customer, it is also possible that the adhesive is applied to the entire first surface. In particular, the adhesive may be applied only to a selected portion of the first surface where the metallic intermediate layer shall be present later. Other parts of the first surface of the core layer may remain without any adhesive. Therefore, the step of applying the adhesive to the first surface may be carried out such that the adhesive is only present in one or more surface areas or surface sections of the first surface, while other surface areas or surface sections of the first surface remain free of adhesive and are thus not covered with the adhesive. The adhesive may form an adhesive layer configured to bond further layers to the first surface of the core layer.

The adhesive may be applied to the portion of the first surface using a roller element. The roller element may be configured to apply the adhesive to the selected portion of the first surface, for example by pressing the roller against the first surface.

By the subsequent pressing of the metallic intermediate layer against the first surface of the core layer, the parts of the intermediate layer that respectively face the adhesive-covered surface areas or surface sections of the first surface of the core layer are bonded to the core layer via the adhesive. This means that not all parts of the intermediate layer may be bonded to the first surface of the core layer, but at least the parts of the intermediate layer which, due to the pressing, have a direct contact to the adhesive-covered areas or sections present at the first surface. Other parts of the intermediate layer which do not have a direct contact to the adhesive during the pressing will potentially not be bonded to the first surface of the core layer, thereby allowing these non-bonded parts to be moved away and thus be removed afterwards as will be further explained below.

That is, the first part of the intermediate layer is bonded via the adhesive to the portion of the first surface of the core layer. Since the portion of the first surface where the adhesive was applied may include several surface areas or sections, the first part of the intermediate layer which is bonded via the adhesive may likewise include several subparts or subsections of the first part of the intermediate layer each of which is bonded to the first surface of the core layer via the adhesive. The surface areas or sections of the first surface of the core layer where the adhesive is applied may include spatially separated surface areas or sections. Accordingly, the subparts or subsections of the first part of the intermediate layer may constitute spatially separated subparts or subsections of the intermediate layer. In this manner, a pattern of metallic material may be provided by the application of the intermediate layer to the core layer, meaning that the metallic effect can be distributed within the card-like data carrier with various different patterns.

As indicated above, the second part, i.e., all subparts or subsections of the intermediate layer which are not bonded to the first surface of the core layer, may be moved away, e.g., removed, after bonding the first part of the intermediate layer to the first surface of the core layer. The removal of the second part of the intermediate layer may be provided by a carrier layer, e.g., a carrier film, which is connected or bonded to the intermediate layer during provision of the intermediate layer and also during the pressing of the intermediate layer against the first surface of the core layer. After the pressing of the intermediate layer against the first surface of the core layer, the first part of the intermediate layer which is bonded to the portion of the first surface via the adhesive may be released or peeled-off the carrier layer such that only the second part of the intermediate layer which is not bonded to the first surface remains connected to the carrier layer. In this manner, it is possible that the second part of the metallic intermediate layer can be collected during the manufacturing process, thereby allowing a reuse or recycling of the second part of the metallic intermediate layer.

According to an embodiment, the second part of the intermediate layer which is moved away from the first surface of the core layer is representative for a part of the intermediate layer which is not bonded via the adhesive to the portion of the first surface of the core layer.

As explained above, this allows to collect the metallic material included in the left-over intermediate layer in order to reuse this metallic material. The removed second part of the intermediate layer may be supplied to a further treatment process in which the purity of the metallic material is further increased, for example by separating the material of the above-mentioned carrier layer from the metallic material of the intermediate layer.

According to an embodiment, the core layer comprises a non-metallic material.

The core layer may comprise a plastic material, for example polyvinylchloride (PVC). Thus, the core layer may herein also be referred to as the so-called PVC corestock. As indicated above, an antenna element or other circuitry may be embedded in the core layer.

The intermediate layer comprises a carrier film having a surface on which the metallic material of the intermediate layer is present.

As described above, the carrier film may be a carrier layer allowing the second part of the intermediate layer to be removed after the first part of the intermediate layer has been pressed against and bonded to the first surface of the core layer. The carrier layer may be in the form of a carrier film or carrier foil. This film or foil can be very thin, i.e., can have a very small thickness, and/or may have the function to carry and transport the intermediate layer to the first surface of the core layer and, after the bonding, move the second part of the intermediate layer away from the first surface of the core layer. In other words, the carrier layer may provide a transport function according to which the intermediate layer can be supplied to and parts of it can be moved away, e.g., removed, from the first surface of the core layer. The carrier layer may allow the bonded first part of the intermediate layer to be pulled-off, e.g., peeled-off, the carrier layer, while retaining the non-bonded second part of the intermediate layer such that the non-bonded second part of the intermediate layer can be moved away from the first surface of the core layer.

It is possible that the carrier layer does not comprise any polyethylene terephthalate (PET) and/or ink materials. The method thus provides a way to produce card-like data carriers with metallic effect, without the use of PET-based metallic foils and without the use of metallic inks. In general, it is possible with the method to produce card-like data carriers without the bonding of two different plastic materials.

According to an embodiment, the metallic material of the intermediate layer is present in the form of a metal foil which is supported on the surface of the carrier film.

The intermediate layer may comprise or consist of the metal foil. This metal foil may be directly connected to the surface the carrier film such, for example also via an adhesive connection or the like.

According to an embodiment, the method further comprises arranging the intermediate layer between at least one roller element and the first surface of the core layer.

The at least one roller element may then press the intermediate layer against the first surface of the core layer to bond the first part of the intermediate layer via the adhesive to the portion of the first surface of the core layer. The roller element may be moved substantially parallel to the first surface while rolling over the first surface of the core layer, such that the first part of the intermediate layer is successively bonded to the corresponding portion of the first surface of the core layer.

According to an embodiment, pressing the intermediate layer against the first surface of the core layer comprises pressing the intermediate layer against the first surface of the core layer using the at least one roller element.

The roller element may be rolled over the first surface with the intermediate layer arranged there between while applying a specified pressure between the roller element and the first surface of the core layer. In this manner, the bonding between the first part of the intermediate layer and the portion of the first surface of the core layer can be ensured.

According to an embodiment, the intermediate layer is successively pressed against the first surface of the core layer by successively rolling the at least one roller element over the first surface of the core layer.

This may ensure that the entire first part of the intermediate layer is securely bonded to the portion of the first surface of the core layer.

After the first part of the intermediate layer has been bonded to the portion of the first surface of the core layer, one or more further layers of material may be applied to cover the bonded first part of the intermediate layer and surface areas of the first surface of the core layer which are not covered by the first part of the intermediate layer. Such further layers may provide a so-called overlay for the card-like data carrier.

According to an embodiment, the first part of the intermediate layer provides a metallic effect for the card-like data carrier.

The metallic effect may be visible and recognizable from the outside of the card-like data carrier. In particular, the metallic effect may be perceived by a person viewing the card-like data carrier. The metallic effect may appear to the viewer as if there is a polished metal or metal pattern inside the card-like data carrier.

According to an embodiment, the method further comprises applying a top layer onto an uncovered portion of the first surface of the core layer and onto the first part of the intermediate layer after moving the second part of the intermediate layer away from the first surface of the core layer.

In particular, after the first part of the metallic intermediate layer has been bonded to the portion of the first surface of the core layer, there will be areas on the first surface at which the metallic intermediate layer is present, i.e., providing covered portions of the first surface of the core layer, as well as areas where the metallic intermediate layer was not bonded to the first surface, i.e., leaving uncovered portions of the first surface of the core layer. The top layer may now be applied over and bonded to these covered and uncovered portions of the first surface of the core layer, in order to provide an additional layer of the stack of layers which finally represent the card-like data carrier. The top layer may be a so-called overlay. The top layer may itself comprise multiple materials, for example multiple sheets of materials. The top layer may provide a protective function to the card-like data carrier and may thus protect the core layer, the antenna element, the intermediate layer and other elements of the card-like data carrier from mechanical or environmental influences.

According to an embodiment, the top layer comprises a non-metallic material.

For example, the top layer may comprise a PVC overlay and/or an additional overlay coating, wherein the PVC overlay may form the outermost layer of the manufactured card-like data carrier.

According to an embodiment, the method further comprises providing an ink material onto the first surface of the core layer before pressing the intermediate layer against the first surface of the core layer.

In other words, an ink layer may be provided to the first surface of the core layer in areas or sections of the first surface where no adhesive is or will be applied to the first surface. However, it is possible that the ink material may be provided as a continuous ink layer that covers the entire first surface. The ink material may be applied to the first surface of the core layer before the adhesive is applied to the portion of the first surface of the core layer.

The method further comprises reusing the second part of the intermediate layer after moving the second part of the intermediate layer away from the first surface of the core layer.

The method is thus extended such that the manufacturing process also encompasses the recycling of the excess metallic material of the intermediate layer. This reusing includes a pre-treatment of the removed second part of the intermediate layer, in which the metallic material of the intermediate layer is separated from the carrier layer mentioned above.

According to an embodiment, the method comprises further steps. In a further step, an adhesive is applied onto a portion of the second surface of the core layer. In a further step, a further intermediate layer comprising a metallic material is provided. In a further step, the further intermediate layer is pressed against the second surface of the core layer, thereby bonding a first part of the further intermediate layer via the adhesive to the portion of the second surface of the core layer. In a further step, a second part of the further intermediate layer is moved away from the second surface of the core layer, while the first part of the further intermediate layer remains adhered to the portion of the second surface of the core layer such that the portion of the second surface of the core layer is covered by the first part of the further intermediate layer.

In other words, the above-described manufacturing principles concerning the application of the first part of the intermediate layer via the adhesive to the portion of the first surface of the core layer may be extended to the opposite side of the core layer, i.e., to the second surface of the core layer. The above-described manufacturing principles concerning the application of one or more metallic parts to the first surface of the core layer, in terms of structure and functionality, may be equally valid for the application of one or more metallic parts to the second surface of the core layer.

According to an aspect, the method as described herein is used for manufacturing a chip-card, a payment card, a smart card or an identification card.

### Brief description of the drawings

The present invention will hereinafter be described in conjunction with the following drawing figures, wherein like numerals denote like elements, and wherein:
- Fig. 1: shows a cross section of a card-like data carrier manufactured by a method as described herein.
- Fig. 2: shows an application of an adhesive layer and an intermediate layer on a first surface of a core layer.
- Fig. 3: shows a method for manufacturing a card-like data carrier.

### Detailed description of exemplary embodiments

The representations and illustrations in the drawings may be schematic and not to scale. A better understanding of the method described above may be obtained through a review of the shown illustrations together with a review of the detailed description that follows.

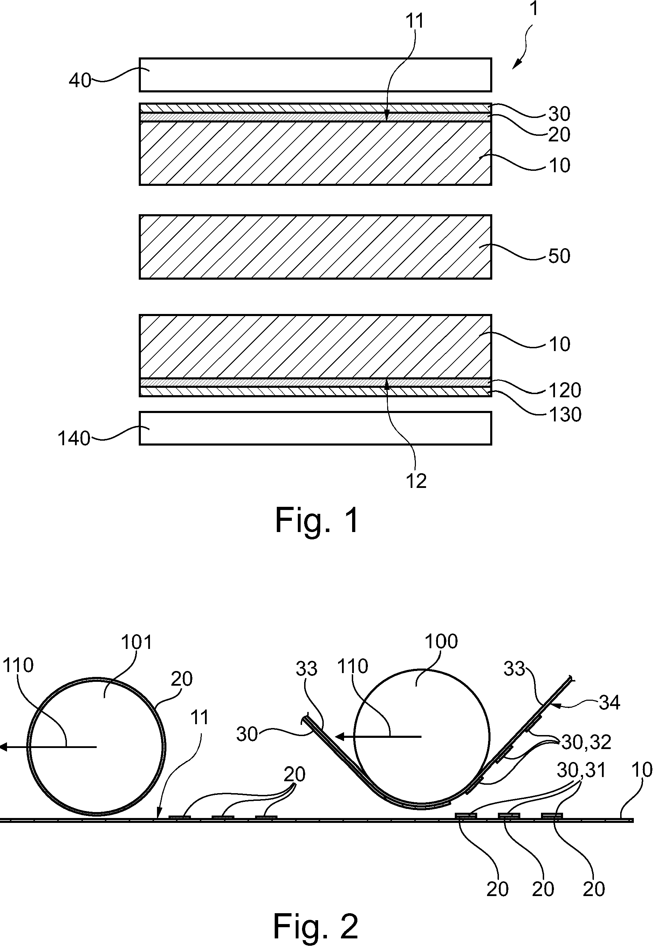

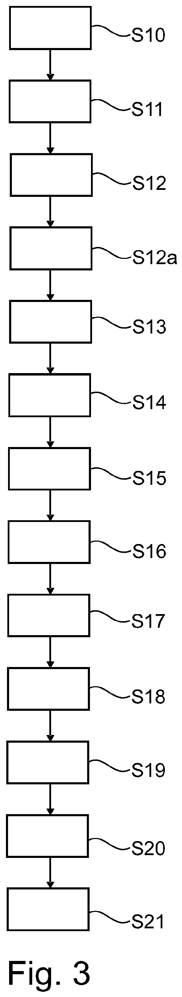

Fig. 1 schematically shows a cross section of a card-like data carrier 1 which is manufactured by a method as described herein. The manufacturing method will be described in more detail with respect to Figures 2 and 3. However, the general structure of the card-like data carrier 1 to be manufactured will be first described with respect to Fig. 1.

The card-like data carrier 1 basically comprises a core layer 10, a first adhesive layer 20 and a first intermediate layer 30. The core layer has a first surface 11 on which the first adhesive layer 20 is applied, wherein the first adhesive layer 20 is used to bond the first intermediate layer 30 to the core layer 10.

In the example shown in Fig. 1, the first intermediate layer 30 is also covered by a first top layer 40 which is arranged on top of the first intermediate layer 30. In particular, the first top layer 40 may be adhered to the first intermediate layer 30 or may laminated therewith during the manufacturing process. It is noted that gaps are illustrated in Fig. 1 between some of the layers, however, it should be understood that these gaps are merely shown for a better distinction between the different layers. Rather, after manufacturing, the layers may be in direct contact with each other.

The core layer 10 includes an antenna element 50 which is configured for contactless communication with an external device, for example a card reading device. The antenna element 50 is integrated or embedded within the core layer 10 as shown in Fig. 1. Although not shown, the card-like data carrier 1 may further comprise a chip element at an outer surface of the card-like data carrier 1, wherein the chip element is configured for a contact-based communication, e.g., data transfer, with an external device, for example a card reading device.

The exemplary card-like data carrier 1 shown in Fig. 1 has a symmetrical appearance, wherein the core layer 10 including the antenna element 50 may provide the central structural part of the card-like data carrier 1. On each side of the core layer 10 may be an arrangement of an adhesive layer 20, 120, an intermediate layer 30, 130 and a top layer 40, 140, respectively.

That is, in addition to the first adhesive layer 20, the first intermediate layer 30 and the first top layer 40, the card-like data carrier 1 may include a second adhesive layer 120 applied to a second surface 12 of the core layer 10, a second intermediate layer 130 and a second top layer 140. The second adhesive layer 120 is used to bond the second intermediate layer 130 to the second surface 12 of the core layer 10. The second intermediate layer 130 is covered by the second top layer 140 which is arranged on top of the second intermediate layer 130. The second top layer 140 may be adhered to the second intermediate layer 130 or may laminated therewith during the manufacturing process.

The core layer 10 may be made of a plastic material, for example PVC. The intermediate layers 30, 130 may be metallic layers which provide a metallic effect to the card-like data carrier 1. It is exemplarily possible that the metallic effect may be also applied on a PET layer. One or both of the intermediate layers 30, 130 may thus comprise a metallic material or consist of a metallic material. The top layers 40, 140 may comprise a plastic material, for example PVC.

Fig. 2 shows an application of an adhesive layer and an intermediate layer on a first surface of a core layer. In particular, Fig. 2 shows the application of the first adhesive layer 20 and the first intermediate layer 30 on the first surface 11 of the core layer 10, the layers being described above with respect to Fig. 1.

The first adhesive layer 20 is applied to a portion of the first surface 11 of the core layer 10. This means that the first adhesive layer 20 may be applied to multiple, spatially separated smaller parts of the first surface 11, but not to the entire first surface 11. However, if required by the customer, the first adhesive layer 20 may be applied to the entire first surface, in particular to the full ID-1 format area. In the example shown in Fig. 2, three separate surface areas of the first surface 11 have been covered with the adhesive material of the first adhesive layer 20. A roller element 101 may be used to apply the adhesive layer 20 to the first surface of the core layer 10. During the application of the adhesive layer 20, the roller element 101 may be rolled over the first surface 11 of the core layer 10 in the rolling direction 110. Specified areas on an outer surface of the roller element may be provided with the adhesive such that, when rolling the roller element 101 over the first surface 11, the adhesive may be transferred to the corresponding surface areas at the first surface 11.

It is noted that the adhesive layer 20 may be applied only to surface areas on the first surface 11 where the intermediate layer 30 is desired to be present later on. In other words, it may not be desired to provide the metallic effect by the intermediate layer 30 for the entire card-like data carrier 1, but rather for specified areas of the card-like data carrier 1. Therefore, the method may include an application of the intermediate layer 30 comprising the metallic material only in those specified areas where the adhesive has been applied to the first surface 11. Accordingly, the adhesive layer 20 is applied to specified surface areas on the first surface 11 of the core layer 20 as shown for example in Fig. 2.

After the application of the adhesive layer 20, the intermediate layer 30 may be applied to the fist surface 11 of the core layer 10 which may include bonding the intermediate layer 30 to the first surface 11 via the adhesive layer 20. Another roller element 100 may be used to apply the intermediate layer to the first surface 11. In particular, the intermediate layer 30 may be carried by a carrier layer 33 or carrier film 33. The carrier film 33 may represent a support or carrier for the intermediate layer 30 during the application process of the intermediate layer 30. For example, the intermediate layer 30 may be connected, e.g., bonded, to the carrier film 33. The combination of the intermediate layer 30 and the carrier film 33 may then be arranged between the roller element 100 and the cover layer 10. The intermediate layer 30 and the carrier film 33 is then pressed against the first surface 11 of the core layer 10 by rolling the roller element 100 over the first surface 11 in the rolling direction 110, thereby pressing the intermediate layer 30 against the specified portions of the adhesive layer 20 which are already present on the first surface 11. After the roller element 100 has been rolled over these specified portions, the carrier film 33 is drawn or pulled away from the first surface 11 such that parts of the intermediate layer 30 which were not bonded to the first surface 11 by the adhesive layer 20 are moved away from the first surface 11 together with the carrier film 33.

In other words, the intermediate layer 30 is pressed against the first surface 11 of the core layer 10, thereby bonding a first part 31, e.g., including several subparts 31, of the intermediate layer 30 via the adhesive 20 to the first surface 11 of the core layer 10. A second part 32, e.g., including several subparts 32, of the intermediate layer 30 is moved away, e.g., removed, from the first surface 11 of the core layer 10, while the first part 31 of the intermediate layer 30 remains adhered to the first surface 11 of the core layer 10 such that the first surface 11 of the core layer 10 is covered by the first part 31 of the intermediate layer 30. In the example shown in Fig. 2, three of such first parts 31 of the intermediate layer 30 were already bonded to the first surface 11.

In this manner, the removed second parts 32 of the intermediate layer 30 can be collected and reused after the first parts 31 of the intermediate layer 30 have been bonded to the first surface 11. The second parts 32 may be removed with the help of the carrier film 33 to which the second parts 32 of the intermediate layer 20 remain connected.

In particular, the first parts 31 of the intermediate layer 30 were peeled-off the carrier film 33 due to the higher bonding forces between the first surface 11 and the first parts 31 of the intermediate layer 30 generated by the adhesive layer 20. The second parts 32 of the intermediate layer 20 were not peeled-off the carrier film 33 such that the second parts 32 of intermediate layer 20 can then be moved or transferred away from the manufacturing site to be reused or recycled in a further processing step. It is noted that the second parts 32 of the intermediate layer 20 may be easily separated from the carrier film 33 in such a further processing step. However, it may also be possible that the combination of the carrier film material comprised in the carrier film 33 and the metallic material comprised in the second parts 32 of the intermediate layer 30 may be reused as a combined product. For example, the metallic material can be reused although it may still comprise the material of the carrier film 33. For example, the amount of carrier film material compared to the amount of metallic material is neglectable. Preferably, the combined product of the metallic material and the carrier film material does not comprise any polyethylene terephthalate (PET).

Fig. 3 shows a method for manufacturing a card-like data carrier 1, in particular a method for manufacturing the card-like data carrier 1 indicated with its cross-section in Fig. 1, wherein reference is also made to Fig. 2. In a step S10 of the method, a core layer 10 having a first surface 11 and a second surface 12 opposite to the first surface 11 is provided. In a further step S11, an adhesive 20 is applied onto a portion of the first surface 11 of the core layer 10. In a further step S12, an intermediate layer 30 comprising a metallic material is provided. In a further step S12a, the intermediate layer 30 may be arranged between at least one roller element 100 and the first surface 11 of the core layer 10. In a further step S13, the intermediate layer 30 is pressed against the first surface 11 of the core layer 10, thereby bonding a first part 31 of the intermediate layer 30 via the adhesive 20 to the portion of the first surface 11 of the core layer 10. In a further step S14, a second part 32 of the intermediate layer 30 is removed from the first surface 11 of the core layer 10, while the first part 31 of the intermediate layer 30 remains adhered to the portion of the first surface 11 of the core layer 10 such that the portion of the first surface 11 of the core layer 10 is covered by the first part 31 of the intermediate layer 30.

In a further step S15, a top layer 40 may be applied onto an uncovered portion of the first surface 11 of the core layer 10 and onto the first part 31 of the intermediate layer 30 after moving the second part 32 of the intermediate layer 30 away from the first surface 11 of the core layer 10. In a further step S16, an ink material may be applied onto the first surface 11 of the core layer 10 before pressing the intermediate layer 30 against the first surface 11 of the core layer 10. Alternatively, the ink material may be applied to the first surface 11 before applying the adhesive 20 to the first surface 11. In a further step S17, the second part 32 of the intermediate layer 30 may be reused after moving the second part 32 of the intermediate layer 30 away from the first surface 11 of the core layer 10.

In a further step S18, an adhesive 120 may be applied onto a portion of the second surface 12 of the core layer 10. In a further step S19, a further intermediate layer 130 comprising a metallic material may be provided. In a further step S20, the further intermediate layer 130 may be pressed against the second surface 12 of the core layer 10, thereby bonding a first part of the further intermediate layer 130 via the adhesive 20 to the portion of the second surface 12 of the core layer 10. In a further step S21, a second part of the further intermediate layer 130 may be moved away from the second surface 12 of the core layer 10, while the first part of the further intermediate layer 130 remains adhered to the portion of the second surface 12 of the core layer 10.

It is possible that the steps S18, S19, S20 and S21 may be performed simultaneously with steps S11, S12, S13 and S14. In other words, the method may include the simultaneous application of the adhesive layers 20, 120 and the metallic intermediate layers 30, 130, respectively, on both sides of the core layer 10.

## Claims

1. A method for manufacturing a card-like data carrier (1), comprising:
providing a core layer (10) having a first surface (11) and a second surface (12) opposite to the first surface (11, S10);
applying an adhesive (20) onto a portion of the first surface (11) of the core layer (10, S11);
providing an intermediate layer (30) comprising a metallic material (S12), wherein the intermediate layer (30) comprises a carrier layer (33) having a surface (34) on which the metallic material of the intermediate layer (30) is present;
pressing the intermediate layer (30) against the first surface (11) of the core layer (10), thereby bonding a first part (31) of the intermediate layer (30) via the adhesive (20) to the portion of the first surface (11) of the core layer (10, S13);
moving a second part (32) of the intermediate layer (30) away from the first surface (11) of the core layer (10), while the first part (31) of the intermediate layer (30) remains adhered to the portion of the first surface (11) of the core layer (10) such that the portion of the first surface (11) of the core layer (10) is covered by the first part (31) of the intermediate layer (30, S14);
reusing the second part (32) of the intermediate layer (30) after moving the second part (32) of the intermediate layer (30) away from the first surface (11) of the core layer (10, S17), **characterised in that** the reusing includes a pre-treatment of the removed second part (32) of the intermediate layer (30) in which the metallic material of the intermediate layer (30) is separated from the carrier layer (33).

2. The method of claim 1,
wherein the second part (32) of the intermediate layer (30) is representative for a part of the intermediate layer (30) which is not bonded via the adhesive (20) to the portion of the first surface (11) of the core layer (10).

3. The method according to any one of the preceding claims,
wherein the core layer (10) comprises a non-metallic material.

4. The method according to any one of the preceding claims,
wherein the metallic material is present in the form of a metal foil which is supported on the surface (34) of the carrier film (33).

5. The method according to any one of the preceding claims, further comprising:
arranging the intermediate layer (30) between at least one roller element (100) and the first surface (11) of the core layer (10, S12a).

6. The method according to claim 5,
wherein pressing the intermediate layer (30) against the first surface (11) of the core layer (10) comprises pressing the intermediate layer (30) against the first surface (11) of the core layer (30) using the at least one roller element (100).

7. The method according to any one of claims 5 to 6,
wherein intermediate layer (30) is successively pressed against the first surface (11) of the core layer (10) by successively rolling the at least one roller element (100) over the first surface (11) of the core layer (10).

8. The method according to any one of the preceding claims,
wherein the first part (31) of the intermediate layer (30) provides a metallic effect for the card-like data carrier (1).

9. The method according to any one of the preceding claims, further comprising:
applying top layer (40) onto an uncovered portion of the first surface (11) of the core layer (10) and onto the first part (31) of the intermediate layer (30) after moving the second part (32) of the intermediate layer (30) away from the first surface (11) of the core layer (10, S15).

10. The method according to claim 9,
wherein the top layer (40) comprises a non-metallic material.

11. The method according to any one of the preceding claims, further comprising:
applying an ink material onto the first surface (11) of the core layer (10) before pressing the intermediate layer (30) against the first surface (11) of the core layer (10, S16).

12. The method according to any one of the preceding claims,
applying an adhesive (20) onto a portion of the second surface (12) of the core layer (10, S18);
providing a further intermediate layer (130) comprising a metallic material (S19);
pressing the further intermediate layer (130) against the second surface (12) of the core layer (10), thereby bonding a first part of the further intermediate layer (130) via the adhesive (20) to the portion of the second surface (12) of the core layer (10, S20);
moving a second part of the further intermediate layer (130) away from the second surface (12) of the core layer (10), while the first part of the further intermediate layer (130) remains adhered to the portion of the second surface (12) of the core layer (10, S21).

13. Use of a method according to any one of the preceding claims for manufacturing a chip-card, a payment card, a smart card or an identification card.

## Patentansprüche

1. Verfahren zur Herstellung eines kartenartigen Datenträgers (1), umfassend:
Bereitstellen einer Kernschicht (10) mit einer ersten Oberfläche (11) und einer der ersten Oberfläche (11) gegenüberliegenden zweiten Oberfläche (12, S10);
Aufbringen eines Klebstoffs (20) auf einen Teil der ersten Oberfläche (11) der Kernschicht (10, S11);
Bereitstellen einer Zwischenschicht (30), die ein metallisches Material aufweist (S12), wobei die Zwischenschicht (30) eine Trägerschicht (33) mit einer Oberfläche (34) aufweist, auf der das metallische Material der Zwischenschicht (30) vorhanden ist;
Pressen der Zwischenschicht (30) gegen die erste Oberfläche (11) der Kernschicht (10), wodurch ein erster Teil (31) der Zwischenschicht (30) über den Klebstoff (20) mit dem Abschnitt der ersten Oberfläche (11) der Kernschicht (10) verbunden wird (S13);
Bewegen eines zweiten Teils (32) der Zwischenschicht (30) von der ersten Oberfläche (11) der Kernschicht (10) weg, während der erste Teil (31) der Zwischenschicht (30) an dem Abschnitt der ersten Oberfläche (11) der Kernschicht (10) haften bleibt, so dass der Abschnitt der ersten Oberfläche (11) der Kernschicht (10) durch den ersten Teil (31) der Zwischenschicht (30) bedeckt ist (S14);
Wiederverwenden des zweiten Teils (32) der Zwischenschicht (30), nachdem der zweite Teil (32) der Zwischenschicht (30) von der ersten Oberfläche (11) der Kernschicht wegbewegt wurde (10, S17), **dadurch gekennzeichnet, dass**
das Wiederverwenden eine Vorbehandlung des entfernten zweiten Teils (32) der Zwischenschicht (30) umfasst, bei der das metallische Material der Zwischenschicht (30) von der Trägerschicht (33) getrennt wird.

2. Verfahren nach Anspruch 1,
wobei der zweite Teil (32) der Zwischenschicht (30) repräsentativ für einen Teil der Zwischenschicht (30) ist, der nicht über den Klebstoff (20) mit dem Abschnitt der ersten Oberfläche (11) der Kernschicht (10) verbunden ist.

3. Verfahren nach einem der vorhergehenden Ansprüche,
wobei die Kernschicht (10) ein nichtmetallisches Material umfasst.

4. Verfahren nach einem der vorhergehenden Ansprüche,
wobei das metallische Material in Form einer Metallfolie vorliegt, die auf der Oberfläche (34) der Trägerfolie (33) aufgebracht ist.

5. Verfahren nach einem der vorhergehenden Ansprüche, ferner umfassend:
Anordnen der Zwischenschicht (30) zwischen mindestens einem Walzenelement (100) und der ersten Oberfläche (11) der Kernschicht (10, S12a).

6. Verfahren nach Anspruch 5,
wobei das Pressen der Zwischenschicht (30) gegen die erste Oberfläche (11) der Kernschicht (10) das Pressen der Zwischenschicht (30) gegen die erste Oberfläche (11) der Kernschicht (30) unter Verwendung des mindestens einen Walzenelements (100) umfasst.

7. Verfahren nach einem der Ansprüche 5 bis 6,
wobei die Zwischenschicht (30) sukzessiv gegen die erste Oberfläche (11) der Kernschicht (10) gedrückt wird, indem das mindestens eine Walzenelement (100) sukzessiv über die erste Oberfläche (11) der Kernschicht (10) gerollt wird.

8. Verfahren nach einem der vorhergehenden Ansprüche,
wobei der erste Teil (31) der Zwischenschicht (30) einen metallischen Effekt für den kartenartigen Datenträger (1) erzeugt.

9. Verfahren nach einem der vorhergehenden Ansprüche, ferner umfassend:
Aufbringen einer oberen Schicht (40) auf einen unbedeckten Abschnitt der ersten Oberfläche (11) der Kernschicht (10) und auf den ersten Teil (31) der Zwischenschicht (30), nachdem der zweite Teil (32) der Zwischenschicht (30) von der ersten Oberfläche (11) der Kernschicht (10) wegbewegt wurde (S15).

10. Verfahren nach Anspruch 9,
wobei die obere Schicht (40) ein nichtmetallisches Material umfasst.

11. Verfahren nach einem der vorhergehenden Ansprüche, ferner umfassend:
Aufbringen eines Tintenmaterials auf die erste Oberfläche (11) der Kernschicht (10), bevor die Zwischenschicht (30) gegen die erste Oberfläche (11) der Kernschicht (10, S16) gedrückt wird.

12. Verfahren nach einem der vorhergehenden Ansprüche,
Auftragen eines Klebstoffs (20) auf einen Abschnitt der zweiten Oberfläche (12) der Kernschicht (10, S18);
Bereitstellen einer weiteren Zwischenschicht (130), die ein metallisches Material umfasst (S19);
Pressen der weiteren Zwischenschicht (130) gegen die zweite Oberfläche (12) der Kernschicht (10), wodurch ein erster Teil der weiteren Zwischenschicht (130) über den Klebstoff (20) mit dem Abschnitt der zweiten Oberfläche (12) der Kernschicht (10) verbunden wird (S20);
Bewegen eines zweiten Teils der weiteren Zwischenschicht (130) von der zweiten Oberfläche (12) der Kernschicht (10) weg, während der erste Teil der weiteren Zwischenschicht (130) an dem Abschnitt der zweiten Oberfläche (12) der Kernschicht (10) haften bleibt (S21).

13. Verwendung eines Verfahrens nach einem der vorhergehenden Ansprüche zur Herstellung einer Chipkarte, einer Zahlungskarte, einer Smartcard oder einer Identifikationskarte.

## Revendications

1. Procédé de fabrication d'un support de données de type carte (1), comprenant :
la fourniture d'une couche centrale (10) présentant une première surface (11) et une deuxième surface (12) en regard de la première surface (11, S10) ;
l'application d'un adhésif (20) sur une partie de la première surface (11) de la couche centrale (10, S11) ;
la fourniture d'une couche intermédiaire (30) comprenant un matériau métallique (S12), dans lequel la couche intermédiaire (30) comprend une couche de support (33) présentant une surface (34) sur laquelle le matériau métallique de la couche intermédiaire (30) est présent ;
le pressage de la couche intermédiaire (30) contre la première surface (11) de la couche centrale (10), en liant ainsi une première partie (31) de la couche intermédiaire (30) via l'adhésif (20) à la partie de la première surface (11) de la couche centrale (10, S13) ;
le déplacement d'une deuxième partie (32) de la couche intermédiaire (30) à l'écart de la première surface (11) de la couche centrale (10), tandis que la première partie (31) de la couche intermédiaire (30) reste collée à la partie de la première surface (11) de la couche centrale (10) de sorte que la partie de la première surface (11) de la couche centrale (10) soit recouverte par la première partie (31) de la couche intermédiaire (30, S14) ;
la réutilisation de la deuxième partie (32) de la couche intermédiaire (30) après le déplacement de la deuxième partie (32) de la couche intermédiaire (30) à l'écart de la première surface (11) de la couche centrale (10, S17), **caractérisé en ce que** la réutilisation inclut un prétraitement de la deuxième partie (32) retirée de la couche intermédiaire (30) dans laquelle le matériau métallique de la couche intermédiaire (30) est séparé de la couche de support (33).

2. Procédé selon la revendication 1,
dans lequel la deuxième partie (32) de la couche intermédiaire (30) est représentative d'une partie de la couche intermédiaire (30) qui n'est pas liée via l'adhésif (20) à la partie de la première surface (11) de la couche centrale (10).

3. Procédé selon l'une quelconque des revendications précédentes,
dans lequel la couche centrale (10) comprend un matériau non métallique.

4. Procédé selon l'une quelconque des revendications précédentes,
dans lequel le matériau métallique est présent sous la forme d'une feuille métallique qui est supportée sur la surface (34) du film de support (33).

5. Procédé selon l'une quelconque des revendications précédentes, comprenant en outre :
l'agencement de la couche intermédiaire (30) entre au moins un élément de rouleau (100) et la première surface (11) de la couche centrale (10, S12a).

6. Procédé selon la revendication 5,
dans lequel le pressage de la couche intermédiaire (30) contre la première surface (11) de la couche centrale (10) comprend le pressage de la couche intermédiaire (30) contre la première surface (11) de la couche centrale (30) à l'aide de l'au moins un élément de rouleau (100).

7. Procédé selon l'une quelconque des revendications 5 et 6,
dans lequel la couche intermédiaire (30) est pressée successivement contre la première surface (11) de la couche centrale (10) par le roulement successif de l'au moins un élément de rouleau (100) sur la première surface (11) de la couche centrale (10).

8. Procédé selon l'une quelconque des revendications précédentes,
dans lequel la première partie (31) de la couche intermédiaire (30) confère un effet métallique au support de données de type carte (1).

9. Procédé selon l'une quelconque des revendications précédentes, comprenant en outre :
l'application d'une couche supérieure (40) sur une partie découverte de la première surface (11) de la couche centrale (10) et sur la première partie (31) de la couche intermédiaire (30) après le déplacement de la deuxième partie (32) de la couche intermédiaire (30) à l'écart de la première surface (11) de la couche centrale (10, S15).

10. Procédé selon la revendication 9,
dans lequel la couche supérieure (40) comprend un matériau non métallique.

11. Procédé selon l'une quelconque des revendications précédentes, comprenant en outre :
l'application d'un matériau d'encre sur la première surface (11) de la couche centrale (10) avant le pressage de la couche intermédiaire (30) contre la première surface (11) de la couche centrale (10, S16).

12. Procédé selon l'une quelconque des revendications précédentes, comprenant en outre :
l'application d'un adhésif (20) sur une partie de la deuxième surface (12) de la couche centrale (10, S18) ;
la fourniture d'une autre couche intermédiaire (130) comprenant un matériau métallique (S19) ;
le pressage de l'autre couche intermédiaire (130) contre la deuxième surface (12) de la couche centrale (10), en liant ainsi une première partie de l'autre couche intermédiaire (130) via l'adhésif (20) à la partie de la deuxième surface (12) de la couche centrale (10, S20) ;
le déplacement d'une deuxième partie de l'autre couche intermédiaire (130) à l'écart de la deuxième surface (12) de la couche centrale (10), tandis que la première partie de l'autre couche intermédiaire (130) reste collée à la partie de la deuxième surface (12) de la couche centrale (10, S21).

13. Utilisation d'un procédé selon l'une quelconque des revendications précédentes pour fabriquer une carte à puce, une carte de paiement, une carte intelligente ou une carte d'identification.
